# FASCICULE DE BREVET EUROPEEN

(11) **EP 2 888 467 B1**
(45) Date de publication et mention de la délivrance du brevet: **11.12.2019**
(21) Numéro de dépôt: 13773281.4
(22) Date de dépôt: 14.08.2013
(51) Int. Cl.: F02K 9/46

(54) **PROCÉDÉ DE MISE EN FROID D'UNE POMPE DANS UN CIRCUIT D'ALIMENTATION D'UN MOTEUR-FUSÉE**
KÜHLVERFAHREN ZUM VORKÜHLEN EINER PUMPE IN EINEM VERSORGUNGSKREIS EINES RAKETENTRIEBWERKS
COOLING METHOD OF A PUMP IN A SUPPLY CIRCUIT OF A ROCKET MOTOR

(30) Priorité: 22.08.2012 FR 1257932
(43) Date de publication de la demande: 01.07.2015
(73) Titulaire: ArianeGroup SAS, 75015 Paris (FR); Centre National d'Etudes Spatiales (CNES), 75001 Paris (FR)
(72) Inventeur: LE GOFFIC, Yvan, F-27950 Saint-Marcel (FR)
(74) Mandataire: Calvo de Nó, Rodrigo
(86) Numéro de dépôt international: PCT/FR2013/051940
(87) Numéro de publication internationale: WO 2014/044939

(56) Documents cités:
- DE-B1- 1 626 082
- GB-A- 792 909
- US-A- 5 551 230
- US-A- 5 862 670

## Description

### Arrière-plan de l'invention

La présente invention concerne le domaine des techniques cryogéniques, et en particulier un procédé de mise en froid d'un dispositif relié à un réservoir cryogénique à travers un conduit principal d'admission pour l'alimentation du dispositif en fluide cryogénique après la mise en froid.

Dans le domaine des techniques cryogéniques, il est souvent nécessaire d'assurer la mise en froid de dispositifs divers, c'est-à-dire, leur refroidissement graduel de la température ambiante aux basses températures de fonctionnement dans le domaine cryogénique, ceci afin d'éviter les chocs thermiques. Parmi les dispositifs devant normalement faire l'objet d'une telle mise en froid on compte notamment les pompes cryogéniques et plus particulièrement les turbopompes des moteurs-fusées à ergols liquides cryogéniques.

La mise en froid d'un dispositif est typiquement assurée par l'introduction graduelle et contrôlée d'un fluide cryogénique dans le dispositif à mettre en froid. Dans l'état de la technique, ce fluide cryogénique est introduit dans le dispositif à travers le même conduit principal d'admission servant à l'alimentation du dispositif en fluide cryogénique après sa mise en froid.

Le document US5862670 A1 divulgue un procédé de mise en froid d'un dispositif relié à un réservoir cryogénique selon l'art antérieur.

Toutefois, la mise en froid par introduction du fluide cryogénique à travers ce conduit principal d'admission présente certain inconvénients. Le conduit principal d'admission étant primairement conçu pour un débit sensiblement plus important de fluide cryogénique que celui introduit dans le dispositif pour sa mise à froid, et ayant en conséquence une section d'écoulement relativement grande, son utilisation pour l'introduction du fluide cryogénique servant à la mise en froid génère notamment un important réchauffement de ce fluide cryogénique avant son introduction dans le dispositif. Cet inconvénient est aggravé lors de la mise à froid d'un dispositif, tel qu'une pompe, ayant un conduit principal d'échappement avec une section d'écoulement plus étroite que celui d'admission. Le fluide cryogénique sortant du dispositif étant mis en froid est normalement au moins partiellement gazeux, ayant été réchauffé par les masses à refroidir et les flux thermiques vers l'extérieur. Il est donc important de limiter les pertes de charge en aval du dispositif à mettre en froid, afin d'éviter un blocage thermique de l'écoulement du fluide cryogénique pendant la mise en froid. Or, l'évacuation du fluide cryogénique par un conduit principal d'échappement plus étroit que celui d'admission augmente les pertes de charge en aval du dispositif à mettre en froid, rendant celle-ci sensiblement plus contraignante.

### Objet et résumé de l'invention

La présente invention vise à remédier à ces inconvénients. En particulier, elle vise à proposer un procédé de mise en froid qui permette une mise en oeuvre simplifiée.

Suivant au moins un mode de réalisation de l'invention, ce but est atteint grâce au fait que, pendant la mise en froid, un fluide cryogénique est introduit dans le dispositif à mettre en froid à travers un conduit d'admission pour mise en froid qui est différent du conduit principal d'admission pour l'alimentation du dispositif en fluide cryogénique après la mise en froid et présente une section d'écoulement plus étroite que ce conduit principal d'admission.

Ainsi, grâce à la section d'écoulement plus étroite, le réchauffement de ce fluide cryogénique en amont du dispositif à mettre en froid est limité. En outre, ce conduit d'admission pour mise en froid peut plus facilement être rendu résistant aux hautes pressions de manière à simplifier la mise en œuvre du procédé de mise en froid, puisqu'offrant de cette manière une plus grande marge sur la maîtrise de la pression d'entrée du fluide cryogénique dans ce conduit.

Ledit dispositif peut en particulier être une pompe, telle que par exemple une pompe à ergol d'un moteur-fusée, et plus particulièrement une turbopompe. Comme les conduits d'admission des pompes sont normalement plus larges et moins résistants aux hautes pressions que leurs conduits d'échappement, leur mise en froid devient particulièrement délicate à cause du risque de blocage thermique et des pertes de charge en aval de la pompe.

Afin de s'affranchir de sources supplémentaires de fluide cryogénique, le fluide cryogénique introduit dans le dispositif à travers le conduit d'admission pour mise en froid pendant la mise en froid peut provenir aussi dudit réservoir cryogénique. En particulier, suivant une première alternative permettant de simplifier les circuits de fluide cryogénique et d'éviter de gaspiller le fluide cryogénique contenu dans le réservoir, ce fluide cryogénique peut être pompé à partir du réservoir vers ledit dispositif à travers le conduit d'admission pour mise en froid, et revenir du dispositif vers le réservoir à travers ledit conduit principal d'admission en sens contraire à un sens normal d'écoulement du fluide cryogénique après la mise en froid. Comme le conduit principal d'admission est plus large que le conduit d'admission pour mise à froid, cette inversion du sens d'écoulement pendant la mise en froid évite ainsi en grande mesure les pertes de charge en aval du dispositif suivant le sens inversé d'écoulement du fluide cryogénique pendant la mise en froid. Toutefois, afin notamment d'éviter devoir pomper le fluide pendant la mise en froid, le conduit principal d'admission peut alternativement rester fermé et le fluide cryogénique introduit dans le dispositif à partir du réservoir cryogénique être ensuite expulsé à travers une ligne de purge. Ainsi la pression interne du réservoir peut suffire à impulser l'écoulement.

Le fluide cryogénique introduit dans le dispositif à travers le conduit d'admission pour mise en froid peut toutefois alternativement provenir d'une source autre que le réservoir cryogénique alimentant le dispositif cryogénique en fluide cryogénique à travers ledit conduit principal d'admission après la mise en froid. Notamment, mais pas uniquement, dans ce cas, le conduit d'admission pour mise en froid peut être un conduit principal d'échappement du fluide cryogénique après la mise en froid. Le fluide cryogénique peut alors être introduit dans ledit conduit principal d'échappement à travers une ligne de purge pendant la mise en froid.

### Brève description des dessins

L'invention sera bien comprise et ses avantages apparaîtront mieux, à la lecture de la description détaillée qui suit, de trois modes de réalisation représentés à titre d'exemples non limitatifs. La description se réfère aux dessins annexés sur lesquels :
- la figure 1 illustre schématiquement la circulation d'un fluide cryogénique propulsé par une turbopompe dans un circuit d'alimentation d'un moteur fusée à ergols cryogéniques ;
- la figure 2 illustre schématiquement la circulation du fluide cryogénique dans le même circuit lors de la mise à froid de la turbopompe suivant un premier mode de réalisation ;
- la figure 3 illustre schématiquement la circulation du fluide cryogénique dans un circuit similaire lors de la mise à froid de la turbopompe suivant un deuxième mode de réalisation ; et
- la figure 4 illustre schématiquement la circulation du fluide cryogénique dans un autre circuit similaire lors de la mise à froid de la turbopompe suivant un troisième mode de réalisation.

### Description détaillée de l'invention

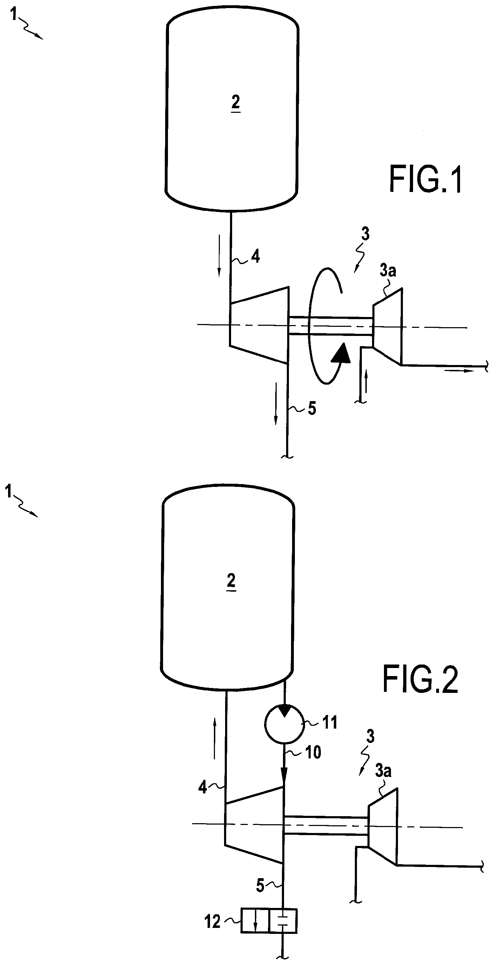

La figure 1 illustre partiellement un circuit 1 servant à alimenter un moteur-fusée (non illustré) en au moins un ergol. Ce circuit 1 comprend un réservoir 2 contenant ledit ergol sous forme de fluide cryogénique, ainsi qu'une turbopompe 3 pour le propulser, à travers le circuit 1, du réservoir 2 à au moins une chambre de combustion du moteur-fusée. Dans le mode de réalisation illustré, cet ergol peut être, par exemple, de l'hydrogène liquide. Un conduit principal 4 d'admission du fluide cryogénique dans la turbopompe 3 relie celle-ci au réservoir 2. Un conduit principal 5 d'échappement du fluide cryogénique de la turbopompe 3 relie celle-ci à la chambre de combustion du moteur fusée. Quand le moteur fusée est allumé, la détente de gaz dans une turbine 3a de la turbopompe 3 actionne celle-ci pour pomper le fluide cryogénique du réservoir vers la turbopompe. Ce gaz peut provenir d'un générateur de gaz, comme dans le système d'alimentation du moteur fusée Vulcain®, ou bien il peut s'agir d'un des ergols cryogéniques, après son réchauffement et vaporisation dans un circuit de refroidissement du moteur fusée (cycle à expandeur), comme dans le système d'alimentation du moteur fusée Vinci®. L'ergol circule ainsi du réservoir 2, successivement à travers ledit conduit principal d'admission 4, la turbopompe 3, et ledit conduit principal d'échappement 3, vers le moteur fusée.

Toutefois, avant l'allumage du moteur fusée et afin d'éviter un choc thermique suite à une arrivée brusque de fluide cryogénique, il est normalement nécessaire de refroidir progressivement certains éléments délicats du circuit 1, et notamment la turbopompe 3, par l'introduction d'un débit réduit de fluide cryogénique. La figure 2 illustre la circulation de ce fluide cryogénique dans un procédé de mise en froid suivant un premier mode de réalisation. Dans ce mode de réalisation, un conduit 10 d'admission pour mise en froid, avec une section d'écoulement plus étroite que le conduit principal d'admission 4, relie le réservoir 2 à la turbopompe 3 en parallèle au conduit principal d'admission 4. Une pompe 11 est installée dans le conduit d'admission pour mise en froid 10 et une vanne 12 dans le conduit principal d'échappement 3. Pendant la mise en froid telle qu'illustrée sur la figure 2, la vanne 12 reste fermée, et un débit restreint de fluide cryogénique est pompé par la pompe 11 vers la turbopompe 3, qui est à l'arrêt. Ce fluide cryogénique circule à travers la turbopompe 3 et le conduit principal d'admission 4 dans un sens opposé au sens normal d'écoulement après la mise à froid, tel qu'illustré sur la figure 1, pour revenir au réservoir 2. Ainsi, la turbopompe 3 et le conduit principal d'admission 4 sont mis en froid grâce au même fluide cryogénique du réservoir 2. Ce fluide cryogénique est toutefois récupéré en grande partie, bien que réchauffé par les masses à mettre en froid, et pourra toujours subséquemment servir à l'alimentation du moteur fusée. Le sens inversé d'écoulement du fluide cryogénique pendant la mise en froid, d'un conduit d'admission pour mise en froid 10 plus étroit vers le conduit principal d'admission 4 plus large, permet d'éviter les blocages thermiques et facilite la mise en œuvre de la mise en froid.

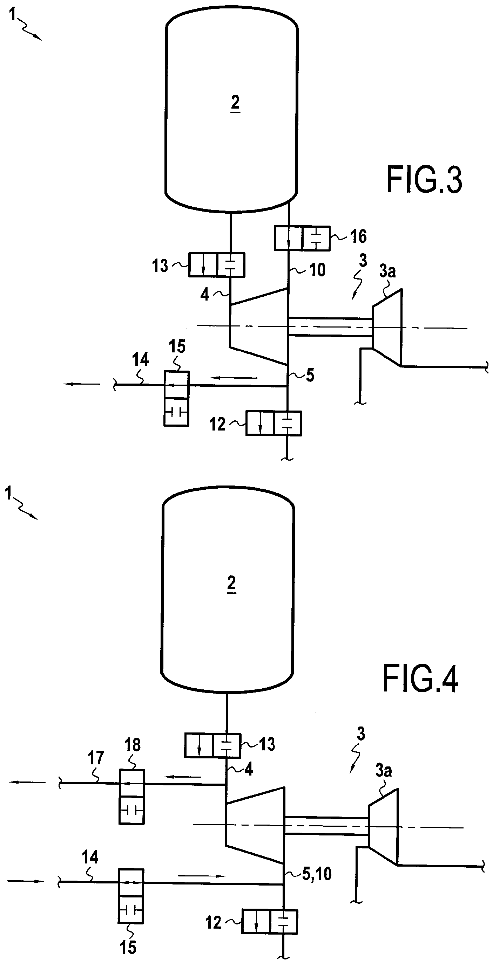

Un mode de réalisation alternatif de ce procédé de mise en froid est toutefois illustré sur la figure 3. Dans ce mode de réalisation, le conduit principal d'admission 4 présente une vanne 13, et le conduit principal d'échappement 5 est relié à une ligne de purge 14 à travers une vanne 15 située en amont de sa vanne 12. Par contre, le conduit d'admission pour mise en froid 10 ne présente pas de pompe, mais uniquement une vanne 16. Pour la mise en froid de la turbopompe 3, les vannes 15 et 16 sont ouvertes, pendant que la vanne 13 du circuit principal d'admission 4 et la vanne 12 du conduit principal d'échappement 5 restent fermées, de manière à permettre la circulation d'un débit restreint de fluide cryogénique du réservoir 2, impulsé par la pression interne du réservoir 2, à travers le conduit d'admission pour mise en froid 10, la turbopompe 3 à l'arrêt, le conduit principal d'échappement 5 et la ligne de purge 14, vers l'extérieur. Ainsi, dans ce mode de réalisation, le fluide cryogénique utilisé pour la mise en froid est expulsé vers l'extérieur et ne peut donc pas normalement être réutilisé plus tard pour l'alimentation du moteur fusée. Par contre, pour mettre en oeuvre ce mode de réalisation il n'est pas nécessaire de prévoir de moyens supplémentaires de pompage dans le circuit 1, car la différence de pression entre l'intérieur et l'extérieur du réservoir 2 suffit à impulser la circulation du fluide cryogénique pour la mise en froid.

Un autre mode de réalisation alternatif de ce procédé de mise en froid est illustré sur la figure 4. Dans ce mode de réalisation, le fluide cryogénique utilisé pour la mise en froid ne provient pas du réservoir 2, mais d'une source externe connectée au conduit principal d'échappement 5 à travers la ligne de purge 14. Ainsi, dans ce mode de réalisation, le conduit d'admission pour mise en froid 10 ne relie pas la turbopompe 3 au réservoir 2 en parallèle au conduit principal d'admission 4, mais est formé par le conduit principal d'échappement 5. Dans ce mode de réalisation, le conduit principal d'admission 4 est relié, entre la vanne 13 et la turbopompe 3, à une autre ligne de purge 17 à travers une vanne 18. Lors de la mise en œuvre du procédé de mise en froid suivant ce mode de réalisation, les vannes 12 et 13 restent fermées, tandis que la ligne de purge 14 est connectée à une source externe de fluide cryogénique et les vannes 15 et 18 sont ouvertes pour permettre la circulation d'un débit restreint de fluide cryogénique, dans un sens opposé au sens normal de circulation après la mise à froid, de la source externe vers l'extérieur, à travers la ligne de purge 14, le conduit principal d'échappement 5, la turbopompe 3, le conduit principal d'admission 4 et la ligne de purge 17.

## Revendications

1. Procédé de mise en froid d'un dispositif (3) relié à un réservoir cryogénique (2) à travers un conduit principal d'admission (4) pour l'alimentation du dispositif (3) en fluide cryogénique après la mise en froid, **caractérisé en ce que**, pendant la mise en froid, un fluide cryogénique est introduit dans le dispositif (3) à travers un conduit d'admission pour mise en froid (10) qui est différent du conduit principal d'admission (4) et présente une section d'écoulement plus étroite que le conduit principal d'admission (4).

2. Procédé de mise en froid suivant la revendication 1, dans lequel ledit dispositif (3) est une pompe.

3. Procédé de mise en froid suivant la revendication 2, dans lequel ledit dispositif (3) est une turbopompe.

4. Procédé de mise en froid suivant l'une quelconque des revendications 2 ou 3, dans lequel ledit dispositif (3) est une pompe à ergol d'un moteur-fusée.

5. Procédé de mise en froid suivant l'une quelconque des revendications précédentes, dans lequel le fluide cryogénique introduit dans le dispositif à travers le conduit d'admission pour mise en froid (10) pendant la mise en froid provient aussi dudit réservoir cryogénique (2).

6. Procédé de mise en froid suivant la revendication 5, dans lequel, pendant la mise en froid, le fluide cryogénique est pompé à partir du réservoir (2) vers ledit dispositif (3) à travers le conduit d'admission pour mise en froid (10), et revient du dispositif (3) vers le réservoir (2) à travers ledit conduit principal d'admission (4) en sens contraire à un sens normal d'écoulement du fluide cryogénique après la mise en froid.

7. Procédé de mise en froid suivant la revendication 5, dans lequel, pendant la mise en froid, le conduit principal d'admission (4) reste fermé et le fluide cryogénique introduit dans le dispositif (3) à partir du réservoir cryogénique (2) est ensuite expulsé à travers une ligne de purge (14).

8. Procédé de mise en froid suivant l'une quelconque des revendications 1 à 4, dans lequel le fluide cryogénique introduit dans le dispositif (3) à travers le conduit d'admission pour mise en froid (10) provient d'une source autre que le réservoir cryogénique (2) alimentant le dispositif (3) en fluide cryogénique à travers ledit conduit principal d'admission (4) après la mise en froid.

9. Procédé de mise en froid suivant l'une quelconque des revendications précédentes, dans lequel le conduit d'admission pour mise en froid (10) est un conduit principal d'échappement (5) après la mise en froid.

10. Procédé de mise en froid suivant la revendication 9, dans lequel, pendant la mise en froid, le fluide cryogénique est introduit dans ledit conduit principal d'échappement (5) à travers une ligne de purge (17).

## Patentansprüche

1. Verfahren zum Kühlen einer Vorrichtung (3), die mit einem kryogenen Behälter (2) über eine Hauptaufnahmeleitung (4) zur Versorgung der Vorrichtung (3) mit kryogenem Fluid nach dem Kühlen verbunden ist, **dadurch gekennzeichnet, dass**, während des Kühlens, ein kryogenes Fluid in die Vorrichtung (3) über eine Aufnahmeleitung (10) zum Kühlen eingebracht wird, die von der Hauptaufnahmeleitung (4) verschieden ist und einen engeren Strömungsquerschnitt als die Hauptaufnahmeleitung (4) aufweist.

2. Verfahren zum Kühlen nach Anspruch 1, wobei die Vorrichtung (3) eine Pumpe ist.

3. Verfahren zum Kühlen nach Anspruch 2, wobei die Vorrichtung (3) eine Turbopumpe ist.

4. Verfahren zum Kühlen nach einem der Ansprüche 2 oder 3, wobei die Vorrichtung (3) eine Treibstoffpumpe eines Raketentriebwerks ist.

5. Verfahren zum Kühlen nach einem der vorhergehenden Ansprüche, wobei das kryogene Fluid, das in die Vorrichtung über die Aufnahmeleitung (10) zum Kühlen eingebracht wird, während des Kühlens auch aus dem kryogenen Behälter (2) stammt.

6. Verfahren zum Kühlen nach Anspruch 5, wobei, während des Kühlens, das kryogene Fluid aus dem Behälter (2) zu der Vorrichtung (3) über die Aufnahmeleitung (10) zum Kühlen gepumpt wird, und von der Vorrichtung (3) zu dem Behälter (2) über die Hauptaufnahmeleitung (4) in einer Richtung entgegengesetzt zu der normalen Strömungsrichtung des kryogenen Fluids nach dem Kühlen zurückgeführt wird.

7. Verfahren zum Kühlen nach Anspruch 5, wobei, während des Kühlens, die Hauptaufnahmeleitung (4) geschlossen bleibt, und das kryogene Fluid, das in die Vorrichtung (3) aus dem kryogenen Behälter (2) eingebracht wird, anschließend über eine Spülleitung (14) ausgestoßen wird.

8. Verfahren zum Kühlen nach einem der Ansprüche 1 bis 4, wobei das kryogene Fluid, das in die Vorrichtung (3) über die Aufnahmeleitung (10) zum Kühlen eingebracht wird, von einer anderen Quelle als dem kryogenen Behälter (2) stammt, der die Vorrichtung (3) mit kryogenem Fluid über die Hauptaufnahmeleitung (4) nach dem Kühlen versorgt.

9. Verfahren zum Kühlen nach einem der vorhergehenden Ansprüche, wobei die Aufnahmeleitung (10) zum Kühlen eine Hauptauslassleitung (5) nach dem Kühlen ist.

10. Verfahren zum Kühlen nach Anspruch 9, wobei, während des Kühlens, das kryogene Fluid in die Hauptauslassleitung (5) über eine Spülleitung (17) eingebracht wird.

## Claims

1. A cooling method for cooling a device (3) connected to a cryogenic tank (2) via a main admission duct (4) for feeding the device (3) with cryogenic fluid once the device is cooled, the method being **characterized in that** during cooling the cryogenic fluid is introduced into the device (3) via a cooling admission duct (10) that is different from the main admission duct (4) and that presents a flow section that is narrower than the flow section of the main admission duct (4).

2. A cooling method according to claim 1, wherein said device (3) is a pump.

3. A cooling method according to claim 2, wherein said device (3) is a turbopump.

4. A cooling method according to claim 2 or claim 3, wherein said device (3) is a propellant pump of a rocket engine.

5. A cooling method according to any preceding claim, wherein the cryogenic fluid introduced into the device via the cooling admission duct (10) during cooling also comes from said cryogenic tank (2).

6. A cooling method according to claim 5, wherein, during cooling, the cryogenic fluid is pumped from the tank (2) to said device (3) via the cooling admission duct (10), and returns from the device (3) to the tank (2) via said main admission duct (4) in a direction opposite to the normal flow direction of the cryogenic fluid once the device is cooled.

7. A cooling method according to claim 5, wherein, during cooling, the main admission duct (4) remains closed and the cryogenic fluid introduced into the device (3) from the cryogenic tank (2) is subsequently expelled via a purge line (14).

8. A cooling method according to any one of claims 1 to 4, wherein the cryogenic fluid introduced into the device (3) via the cooling admission duct (10) comes from a source other than the cryogenic tank (2) that feeds the device (3) with cryogenic fluid via said main admission duct (4) once the device is cooled.

9. A cooling method according to any preceding claim, wherein the cooling admission duct (10) is a main discharge duct (5) once the device is cooled.

10. A cooling method according to claim 9, wherein, during cooling, the cryogenic fluid is introduced into said main discharge duct (5) via a purge line (17).
